# EUROPEAN PATENT APPLICATION

(11) **EP 2 640 025 A1**
(43) Date of publication of application: **18.09.2013**
(21) Application number: 13159464.0
(22) Date of filing: 15.03.2013
(51) Int. Cl.: H04L 25/03, H04B 7/02, H04W 56/00

(54) **Methods for solving timing offset in the arrival times of reference signal and communications apparatus utilizing the same**

(30) Priority: 15.03.2012 US 201261611096 P
(71) Applicant: HTC Corporation, Taoyuan County 330 (TW)
(72) Inventor: Chu, Feng-Seng, Taoyuan City 330 Taoyuan (TW)
(74) Representative: Konkonen, Tomi-Matti Juhani

(57) **Abstract**

A method for solving timing offset in arrival times of a signal transmitted from multiple transmission points in different geographic locations to a user equipment. A phase of the signal to be transmitted by a transmission point is first rotated by a pre-adjusting angle. The phase-rotated signal is transmitted to the user equipment by the transmission point.

## Description

### Technical Field

The embodiment of the invention relates to a phase shifter, and more particularly, to a full range phase shifter.

### Description of the Related Art

Due to mobile communications technology advancements in recent years, various communications services, such as voice call services, data transfer services, and video call services, etc., may be provided to users regardless of their locations. Most mobile communications systems are multiple access systems in which access and wireless network resources are allocated to multiple users. The multiple access technologies employed by the mobile communications systems include the 1x Code Division Multiple Access 2000 (1x CDMA 2000) technology, the 1x Evolution-Data Optimized (1x EVDO) technology, the Orthogonal Frequency Division Multiplexing (OFDM) technology, the Long Term Evolution (LTE) technology, or others. Evolved from the LTE, the LTE-Advanced is a major enhancement of the LTE standard. The LTE-Advanced should be compatible with LTE equipment, and should share frequency bands with the LTE communications system.

One of the important LTE-Advanced benefits is its ability to take advantage of advanced topology networks. For example, Coordinated Multiple Point (CoMP) transmission and reception is a critical feature in LTE-Advanced. In one of the several CoMP scenario, there are multiple transmission points (TP) sharing the same cell identity (CID) and user equipments (UEs) are configured to measure the channel conditions by reference signals from each TP. However, when the UE synchronizes to serving TP only, only the signal from the serving TP (i.e. the TP UE is synchronized with) is sampled at the correct time, and thus channel measurements of non-serving TPs are distorted.

Therefore, methods to solve the timing offset in CoMP measurement are highly required.

### Summary

Methods, computer program product and a communication apparatus for solving timing offset in arrival times of a signal are provided. An exemplary embodiment of a method for solving timing offset in arrival times of a signal transmitted from a plurality of transmission points in different geographic locations to a user equipment comprises: rotating a phase of the signal to be transmitted by using a pre-adjusting angle by a transmission point; and transmitting the phase-rotated signal to the user equipment by the transmission point.

Another exemplary embodiment of a method for solving timing offset in arrival times of a signal transmitted from a plurality of transmission points in different geographic locations to a user equipment comprises: receiving the signal from a transmission point by the user equipment; rotating a phase of the received signal by using a post-adjusting angle by the user equipment; and processing the phase-rotated signal by the user equipment.

Another exemplary embodiment of a method for solving timing offset in arrival times of a signal transmitted from a user equipment to a plurality of transmission points in different geographic locations comprises: rotating a phase of the signal to be transmitted to a transmission point by using a pre-adjusting angle by the user equipment; and transmitting the phase-rotated signal to the transmission point by the user equipment.

Another exemplary embodiment of a method for solving timing offset in arrival times of a signal transmitted from a user equipment to a plurality of transmission points in different geographic locations comprises: receiving the signal from the user equipment by a transmission point; rotating a phase of the received signal by using a post-adjusting angle; and processing the phase-rotated signal.

Another exemplary embodiment of a method for solving timing offset in arrival times of a signal transmitted from a user equipment to a plurality of transmission points in different geographic locations comprises: determining different timing offsets for different transmission points based on timing advance values of the transmission points by the user equipment; and transmitting the signal to each transmission point with a corresponding timing offset by the user equipment.

Another exemplary embodiment of a method for solving timing offset in arrival times of a signal comprises: rotating a phase of the signal to be transmitted by using a pre-adjusting angle by a user equipment or a transmission point in a CoMP cooperating set, wherein the signal to be transmitted is a reference signal or a data signa; and transmitting the phase-rotated signal.

Another exemplary embodiment of a method for solving timing offset in arrival times of a signal comprises: receiving the signal from a user equipment or a transmission point in a CoMP cooperating set, wherein the signal is a reference signal or a data signal; rotating a phase of the signal by using a post-adjusting angle; and processing the phase-rotated signal.

A detailed description is given in the following embodiments with reference to the accompanying drawings.

### Brief description of drawings

The invention can be more fully understood by reading the subsequent detailed description and examples with references made to the accompanying drawings, wherein:

FIG. 1 shows an exemplary homogeneous network with intra-site CoMP;

FIG. 2 shows an exemplary homogeneous network with several high transmission power remote radio heads;

FIG. 3 shows an exemplary heterogeneous network with several low transmission power remote radio heads;

FIG. 4 shows a simplified block diagram of a communication apparatus according to an embodiment of the invention;

FIG. 5 shows some exemplary signal vectors to illustrate the effects of the timing offset in received signal according to an embodiment of the invention;

FIG. 6 shows a flow chart of a method for solving timing offset in arrival times of a reference signal according to an embodiment of the invention;

FIG. 7 shows a flow chart of a method for solving timing offset in arrival times of a reference signal according to another embodiment of the invention.;

FIG. 8 shows a flow chart of a method for solving timing offset in arrival times of a reference signal transmitted from multiple TPs to an UE according to an embodiment of the invention;

FIG. 9 shows a flow chart of a method for solving timing offset in arrival times of a reference signal transmitted from multiple TPs to an UE according to another embodiment of the invention;

FIG. 10 shows a flow chart of a method for solving timing offset in arrival times of a reference signal transmitted from an UE to multiple TPs according to an embodiment of the invention;

FIG. 11 shows a flow chart of a method for solving timing offset in arrival times of a reference signal transmitted from an UE to multiple TPs according to another embodiment of the invention; and

FIG. 12 shows a flow chart of a method for solving timing offset in arrival times of a reference signal transmitted from an UE to multiple TPs according to yet another embodiment of the invention.

### Detailed description

The following description is of the best-contemplated mode of carrying out the invention. This description is made for the purpose of illustrating the general principles of the invention and should not be taken in a limiting sense. The scope of the invention is best determined by reference to the appended claims.

Coordinated multi-point (CoMP) transmission and reception is considered for LTE-Advanced as a tool to improve the coverage of high data rates, the cell-edge throughput, and also to increase system throughput. There are four scenarios defined as follows:

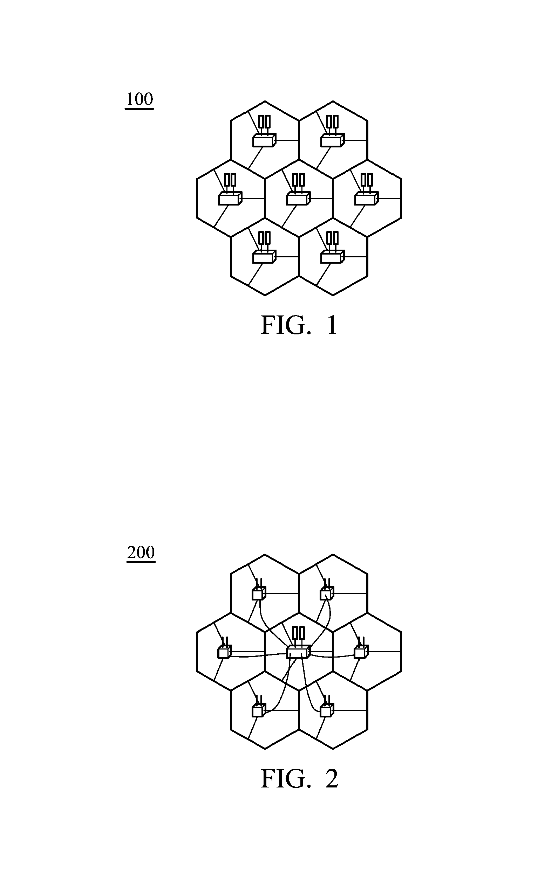

Scenario 1: A homogeneous network with intra-site CoMP. FIG. 1 shows an exemplary homogeneous network with intra-site CoMP. As shown in FIG. 1, the homogeneous network 100 may comprise six evolved node B (eNBs).

Scenario 2: A homogeneous network with several high transmission power remote radio heads (RRHs). FIG. 2 shows an exemplary homogeneous network with several high transmission power remote radio heads. As shown in FIG. 2, the homogeneous network 200 may comprise one eNB and five high transmission power RRHs located around the eNB and connected to the eNB via an optical fiber.

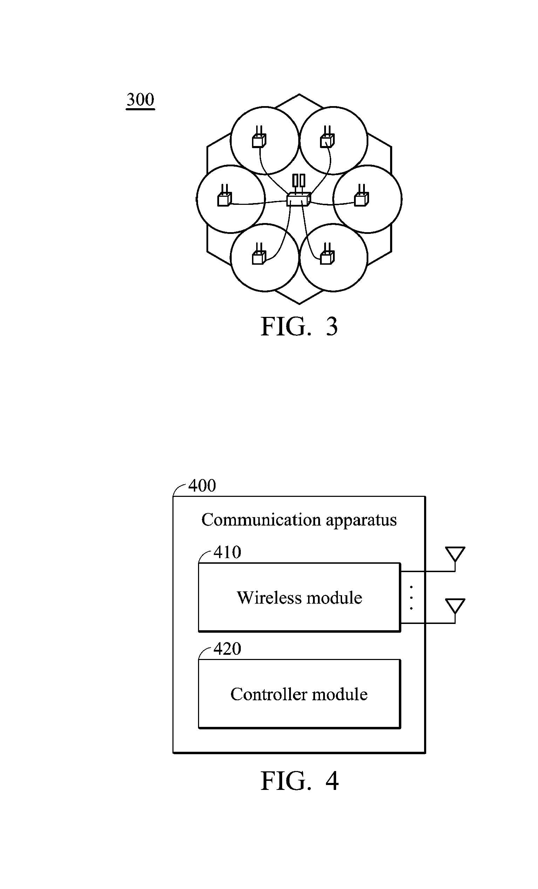

Scenario 3: A heterogeneous network with low power RRHs within the macro cell coverage where the transmission/reception points created by the RRHs have different cell IDs from the macro cell. FIG. 3 shows an exemplary heterogeneous network with several low transmission power remote radio heads. As shown in FIG. 3, the heterogeneous network 300 may comprise one eNB and five low transmission power RRHs located around the eNB and connected to the eNB via an optical fiber.

Scenario 4: A heterogeneous network with low power RRHs within the macrocell coverage where the transmission/reception points created by the RRHs have the same cell IDs as the macro cell as shown in FIG. 3.

In each of the scenarios, multiple possible CoMP schemes are available and are categorized as follows:

1). Joint Processing (JP): Data for a UE is available at more than one transmission point in the CoMP cooperating set (definition below) for a time-frequency resource. Joint Transmission (JT): Simultaneous data transmission from multiple transmission points (which are part of or an entire CoMP cooperating set) to a single UE or multiple UEs in a time-frequency resource. Here, data to a UE is simultaneously transmitted from multiple transmission points, e.g. to (coherently or non-coherently) improve the received signal quality and/or data throughput. Dynamic point selection/blanking (DPS/DPB): Data transmission from one transmission point in a time-frequency resource. The transmitting/muting point may change from one subframe to another including varying over the RB pairs within a subframe. Data is available simultaneously at multiple transmission points. DPS may be combined with JT in which case multiple transmission points can be selected for data transmission in the time-frequency resource.

2). Coordinated Scheduling/Beamforming (CS/CB): Data for a UE is only available at and transmitted from one transmission point in the CoMP cooperating set (i.e., DL data transmission is from that transmission point) for a time-frequency resource but user scheduling/beamforming decisions are made with coordination among transmission points corresponding to the CoMP cooperating set. The transmitting points are chosen semi-statically.

3). Muting may be applied in dynamic and semi-static manner with transmission schemes above.

4). A hybrid category of JP and CS/CB may be possible: Data for a UE may be available only in a subset of transmission points in the CoMP cooperating set for a time-frequency resource but user scheduling/beamforming decisions are made with coordination among transmission points corresponding to the CoMP cooperating set. For example, some transmission points in the CoMP cooperating set may transmit data to the target UE according to JP, while the other transmission points in the CoMP cooperating set may perform according to CS/CB.

All the base stations and RRH joining the operations form different types of sets, which are as follows:

1). CoMP cooperating set: A set of (geographically separated) transmission points directly and/or indirectly participating in data transmission to a UE in a time-frequency resource. Note that this set may or may not be transparent to the UE. Direct participation: transmission point(s) actually transmitting data in the time-frequency resource. Indirect participation: candidate transmission point(s) for data transmission that do not transmit data but contribute in making decisions on the user scheduling/beamforming in the time-frequency resource by users.

2). CoMP transmission point(s): A transmission point or a set of transmission points transmitting data to a UE. The CoMP transmission point(s) is (are) a subset of the CoMP cooperating set. For JT, the CoMP transmission points may include multiple transmission points in the CoMP cooperating set at each subframe for a certain frequency resource. For CS/CB, DPS, SSPS, a single transmission point in the CoMP cooperating set is the CoMP transmission point at each subframe for a certain frequency resource.

3). CoMP measurement set: A set of transmission points, in which channel state/statistical information related to their link to the UE is measured and/or reported by UEs.

FIG. 4 shows a simplified block diagram of a communication apparatus according to an embodiment of the invention. The communication apparatus may be, for example, an eNB, an RRH or a UE in the CoMP networks as illustrated above. The communications apparatus 400 may also comprise at least a wireless module 410 for performing the functionality of wireless transmissions and receptions between one or more peer devices via one or more antennas and a controller module 420 for controlling the operation of the wireless module 410 and other functional components, such as a storage unit storing data and program codes of applications or communication protocols, or others. To further clarify, the wireless module 410 may comprise a baseband unit (not shown) and a Radio Frequency (RF) unit (not shown). The baseband unit may contain multiple hardware devices to perform baseband signal processing, including Analog to Digital Conversion (ADC)/Digital to Analog Conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be 2.1GHz, or 2.6GHz utilized in the LTE systems, or others depending on the RAT in use. In addition to the LTE system, it is to be understood that the invention may be applied to any future LTE-based technology.

In CoMP scenario 4, there are multiple TPs and are transmitting signals to or receiving signals from UE(s). As the distances from TPs, which are located in different geographic locations, to UE are different, the timing misalignment among TPs exists. Thus, the signals transmitted from all TPs may possibly arrive at the UE at different times. Similarly, the signals transmitted from a UE to all TPs may possibly arrive at different times.

For example, considering the case when each TP sends a reference signal to one UE and requests the UE to measure the channel conditions from all TPs, since the UE is only synchronized with one TP (which is called serving TP), there is a timing offset on signals received from other TPs (which is called non-serving TPs). Such timing offset results in a phase difference in signal space, and creates erroneous measurements. Thus, the signals received from other TPs (or transmitted to other TPs) are sampled at incorrect time.

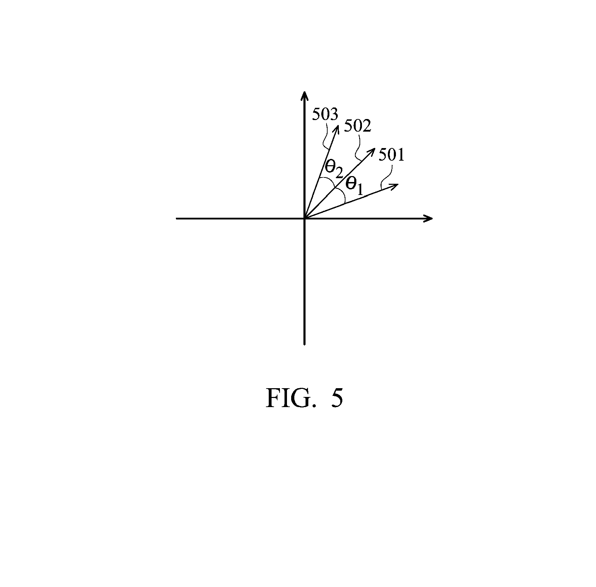

FIG. 5 shows some exemplary signal vectors to illustrate the effects of the timing offset in received signals according to an embodiment of the invention. The signal vector 501 represents an original signal to be transmitted. The signal vector 502 represents the ideal received signal without a timing offset. The signal vector 503 represents the real received signal with a timing offset. The angle represents the phase difference between the signal vectors 501 and 502 caused by channel effects, and the angle represents the phase difference between the signal vectors 502 and 503 caused by timing offset. Because timing offset exists, the vector projection of the signal vector 503 on the signal vector 501 is different from the vector projection of the signal vector 502 on the signal vector 501.

To solve the timing offset problem, based on the concepts of the invention, a signal may be pre-adjusted (that is, adjusted before being transmitted) or post-adjusted (that is, adjusted after being received) by a predetermined angle to solve undesired timing offset. Please note that, the signal referred in the following pre-adjusting method and post-adjusting method of the present invention is not limited to be a specific type of signal, that is, the signal can be a reference signal, such as downlink or uplink reference signal defined in LTE-A system or any other wireless communication, or, the signal can also be a data signal which has timing offset problem necessary to be solved. Therefore, although the following embodiments are described with reference signal, it should be understood that the reference signal utilized therein are merely examples for clarify the descriptions and the invention should not be limited thereto.

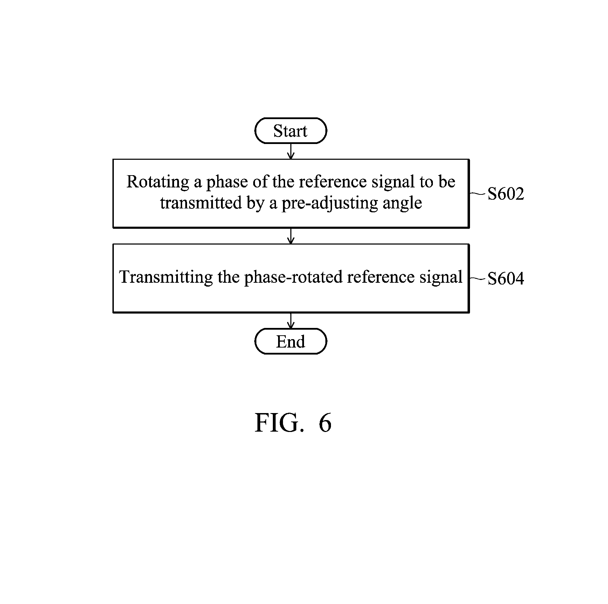

FIG. 6 shows a flow chart of a method for solving timing offset in arrival times of a reference signal according to an embodiment of the invention. In this embodiment, a phase of the reference signal is pre-adjusted before being transmitted. First of all, a phase of the reference signal to be transmitted may be rotated by a pre-adjusting angle (Step S602). According to an embodiment of the invention, the phase pre-adjusting method may be implemented in either downlink case, i.e. implemented in a TP, or uplink case, i.e. implemented in a UE, and the device to pre-adjust the phase of the reference signal is the transmitter for the reference signal. Next, the phase-rotated reference signal may be transmitted by the UE or the TP in the CoMP cooperating set (depending on whether it is applied in the downlink case or uplink case) (Step S604).

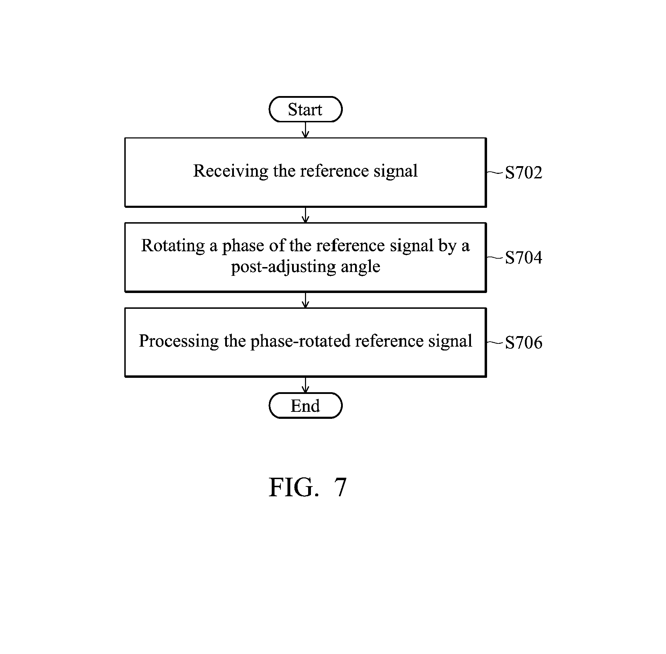

FIG. 7 shows a flow chart of a method for solving timing offset in arrival times of a reference signal according to another embodiment of the invention. In this embodiment, a phase of the reference signal is post-adjusted after being received. After the reference signal is received (Step S702), a phase of the reference signal may be rotated by a post-adjusting angle (Step S704). According to an embodiment of the invention, the phase post-adjusting method may be implemented in either downlink case, i.e. implemented in a UE, or uplink case, i.e. implemented in a TP, and the device to post-adjust the phase of the reference signal is the receiver for the reference signal. Next, the phase-rotated reference signal may be processed by the UE or the TP in the CoMP cooperating set (depending on whether it is applied in the downlink case or uplink case) (Step S706).

To further describe the concepts of the invention, several downlink and uplink embodiments will be discussed in more detail in the following paragraphs. In the downlink case, multiple TPs, including the serving TP and non-serving TP(s), which is/are located in different geographic locations, transmit the reference signal to the UE. As the distances from the TPs to the UE are different, there should be multiple timing differences for the TP(s). For the downlink case, the timing offset problem may be solved by (a1) the TP pre-adjusting the phase of the reference signal by a pre-adjusting angle; or (b1) the UE post-adjusting the phase of each reference signal received from different TPs by different post-adjusting angles. Whatever the pre-adjusting method or the post-adjusting method is used, it is for reducing the timing offset or the phase difference between the received reference signal (which can be represented, in the signal space as the signal vector 503 in FIG. 5) and the ideal reference signal to be transmitted (which can be represented as the signal vector 501 in FIG. 5)

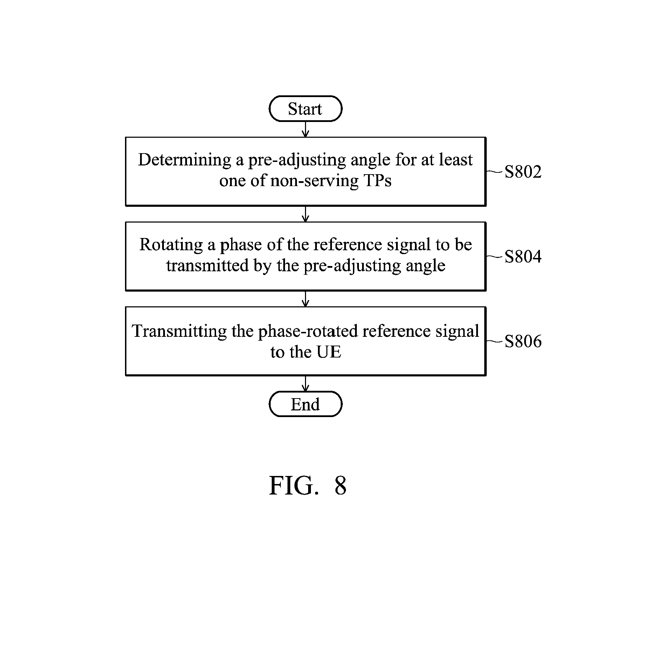

For the downlink solution (a1), FIG. 8 shows a flow chart of a method for solving timing offset in arrival times of a reference signal transmitted from multiple TPs to a UE according to an embodiment of the invention. First of all, a pre-adjusting angle for at least one of non-serving TPs may be determined (Step S802). Next, a phase of the reference signal to be transmitted may be rotated by the pre-adjusting angle (Step S804). Finally, the non-serving TP may transmit the phase-rotated reference signal to the UE (Step S806).

According to an embodiment of the invention, a pre-adjusting angle for one non-serving TP may be determined according to a timing advance (TA) value of that non-serving TP. The pre-adjusting angle may be determined by that non-serving TP which communicates with the UE, by the serving TP, or by the UE.

When the pre-adjusting angle is determined by the non-serving TP (as the transmitter), the non-serving TP may perform phase rotation, by using the determined pre-adjusting angle, on the reference signal to be transmitted, then the non-serving TP transmits the phase-rotated reference signal to the UE (as the receiver). In another embodiment, when the pre-adjusting angle is determined by the serving TP (instead of the non-serving TP), information regarding to the pre-adjusting angle may be transmitted from the serving TP to the non-serving TP via an interface disposed therebetween (such as the optical fiber as shown in FIG.3) or any existing control channel signaling when required, then the non-serving TP may perform phase rotation, by using the obtained pre-adjusting angle, on the reference signal to be transmitted and transmit the phase-rotated reference signal to the UE. In addition, when the pre-adjusting angle is determined by the serving TP, the serving TP may also perform phase rotation, by using the determined pre-adjusting angle, on the reference signal to be transmitted, and transmit the phase-rotated reference signal to the non-serving TP, such that the non-serving TP can transmit the phase-rotated reference signal to the UE. In another embodiment, the pre-adjusting angle for each non-serving TP which communicates with the UE is determined by the UE (if the UE can estimate the timing advance value for each non-serving TP), and information regarding to the pre-adjusting angle may be transmitted from the UE to the non-serving TP via any possible interface. Thus, the non-serving TP may perform phase rotation, by using the obtained pre-adjusting angle, on the reference signal to be transmitted, then transmit the phase-rotated reference signal to the UE.

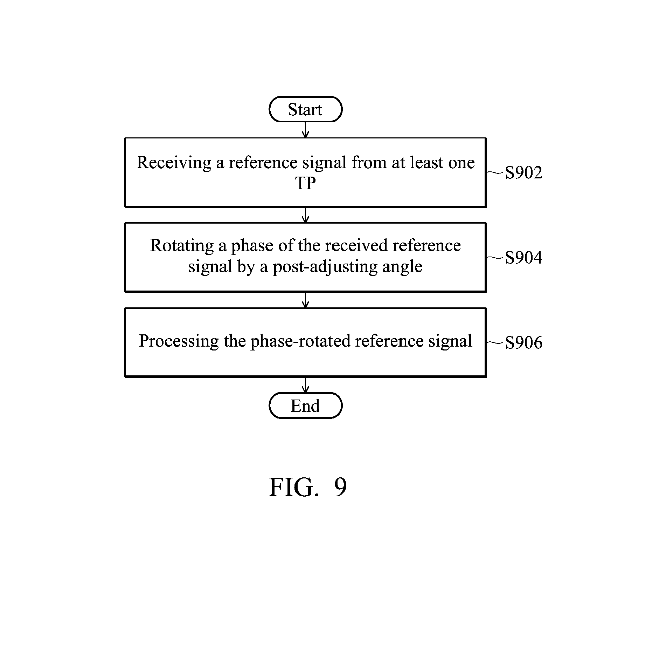

For the downlink solution (b1), FIG. 9 shows a flow chart of a method for solving timing offset in arrival times of a reference signal transmitted from multiple TPs to a UE according to another embodiment of the invention. First of all, the UE may receive a reference signal from at least one TP (Step S902). Next, the UE may rotate a phase of the received reference signal by a post-adjusting angle (Step S904). Finally, the UE may process the phase-rotated reference signal (Step S906).

According to an embodiment of the invention, the post-adjusting angle corresponding to one non-serving TP may be determined according to a timing advance (TA) value of that non-serving TP. In addition, in the embodiments of the invention, the post-adjusting angle corresponding to a non-serving TP may be determined by the UE itself, by the serving TP synchronized with the UE, or by the non-serving TP. When the post-adjusting angle is determined by the UE itself, the UE then performs phase rotation, by using the determined post-adjusting angle, on the received reference signal. When the post-adjusting angle is determined by the serving TP or the non-serving TP, information regarding to the post-adjusting angle may be transmitted by the serving TP or the non-serving TP to the UE via any existing control channel signaling, such that the UE performs phase rotation on the received reference signal accordingly.

On the other hand, considering the uplink case, the UE transmits the reference signal to multiple TPs, including serving TP and non-serving TP, which are located in different geographic locations. As the distances from the UE to the TPs are different, there should be multiple timing differences of the TP(s). For the uplink case, the timing offset problem may be solved by (a2) the UE pre-adjusting the reference signals to different non-serving TPs by different pre-adjusting angles; (b2) the TP post-adjusting the received reference signal by a post-adjusting angle; or (c) the UE sending reference signals to different non-serving TPs with different timing offsets, which may be transmitted by different antenna ports.

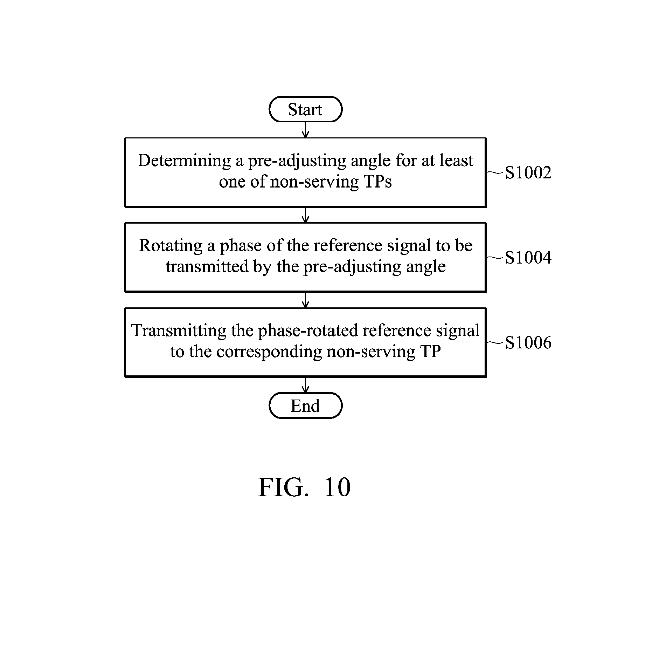

For the uplink solution (a2), FIG. 10 shows a flow chart of a method for solving timing offset in arrival times of a reference signal transmitted from a UE to multiple TPs according to an embodiment of the invention. First of all, a pre-adjusting angle for at least one of non-serving TPs may be determined (Step S1002). Next, a phase of the reference signal to be transmitted may be rotated by the pre-adjusting angle (Step S1004). Finally, the UE may transmit the phase-rotated reference signal to the corresponding non-serving TP (Step S1006).

According to an embodiment of the invention, the pre-adjusting angle corresponding to a non-serving TP may be determined according to a timing advance (TA) value of that non-serving TP. In addition, in the embodiments of the invention, the pre-adjusting angle may be determined by the UE itself, by the serving TP, or by the non-serving TP. When the pre-adjusting angle is determined by the UE itself, the UE may perform phase rotation, by using the determined pre-adjusting angle, on the reference signal, then transmit the phase-rotated reference signal to the corresponding non-serving TP. When the pre-adjusting angle is determined by the serving TP or the non-serving TP, information regarding to the pre-adjusting angle may be transmitted from the serving TP or the non-serving TP to the UE via any existing control channel signaling, such that the UE perform phase rotation on the reference signal to be transmitted accordingly.

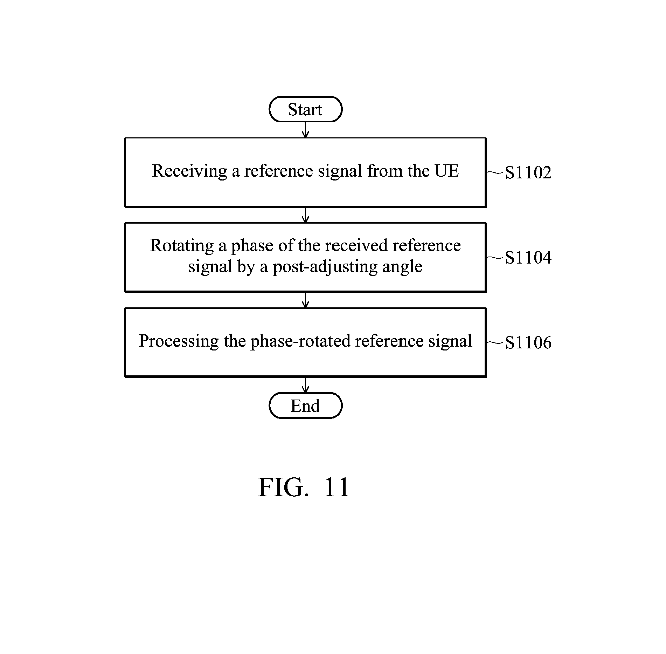

For the uplink solution (b2), FIG. 11 shows a flow chart of a method for solving timing offset in arrival times of a reference signal transmitted from a UE to multiple TPs according to another embodiment of the invention. First of all, at least one non-serving TP may receive a reference signal from the UE (Step S1102). Next, a phase of the received reference signal may be rotated by a post-adjusting angle (Step S1104). Finally, the phase-rotated reference signal may be processed (Step S1106).

According to an embodiment of the invention, the post-adjusting angle for a non-serving TP receiving the reference signal may be determined according to a timing advance (TA) value of the non-serving TP receiving the reference signal. In addition, in the embodiments of the invention, the post-adjusting angle for a non-serving TP receiving the reference signal may be determined by the non-serving TP receiving the reference signal, by the serving TP, or by the UE. When the post-adjusting angle for the non-serving TP is determined by the serving TP or by the UE, information regarding to the post-adjusting angle may be transmitted from the serving TP or UE to the non-serving TP receiving the reference signal via an interface disposed therebetween or any existing control channel signaling when required; and when the information regarding to the post-adjusting angle has been received, the non-serving TP performs phase rotation, by using the post-adjusting angle, on the received reference signal from the UE.

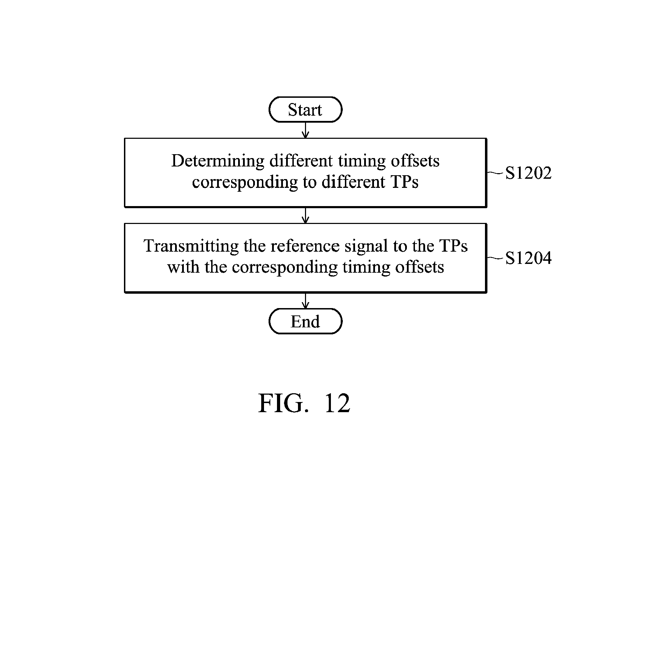

For the uplink solution (c), FIG. 12 shows a flow chart of a method for solving timing offset in arrival times of a reference signal transmitted from a UE to multiple TPs according to yet another embodiment of the invention. First of all, different timing offsets corresponding to different TPs may be determined based on timing advance values of the TPs (Step S1202). Next, the UE may transmit the reference signal to the TPs with the corresponding timing offsets (Step S1204). According to an embodiment of the invention, the UE may transmit the reference signal to different TPs via different antenna ports.

In addition, in the embodiments of the invention, there may be several possible ways for the TPs (including the serving TP or non-serving TP) or the UE to estimate the amount of phase rotation or timing offset for each non-serving TP. According to an embodiment of the invention, a random access procedure may be utilized for estimating the amount of phase rotation or timing offset for each non-serving TP. For example, when a UE transmits a preamble sequence to a cell consisting of several TPs, the TPs may receive this preamble sequence. Next, each non-serving TP may compute a timing advance (TA) value and the serving TP may collect all of the TA values from the non-serving TP(s) via the interface disposed therebetween. Finally, the serving TP may determine the pre-adjusting angle or post-adjusting angle for phase rotation based on the corresponding TA for each non-serving TP.

Note that in some other embodiments of the invention, the pre-adjusting angle or post-adjusting angle for phase rotation may also be determined at the non-serving TP sides as discussed above, and the invention should not be limited thereto.

According to another embodiment of the invention, the UE may also compute the TA for each TP based on the signals (for example, reference signals) received from different TPs, and determine the corresponding pre-adjusting angle or post-adjusting angle for phase rotation based on the corresponding TA for each TP.

Since the phase of the reference signal may be pre-adjusted or post-adjusted, the undesired phase difference due to the timing offsets as shown in FIG. 5 (e.g. or ) may be compensated for. Thus, timing offset in arrival times of the reference signal can be reduced.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for solving timing offset in arrival times of a signal transmitted from a plurality of transmission points in different geographic locations to a user equipment comprising:
rotating a phase of the signal to be transmitted by using a pre-adjusting angle, by a transmission point; and
transmitting the phase-rotated signal to the user equipment, by the transmission point.

2. The method of claim 1, further comprising:
determining the pre-adjusting angle according to a timing advance value of the transmission point, wherein the determining step is performed by a serving transmission point synchronized with the user equipment, by a non-serving transmission point, or by the user equipment.

3. The method of claim 1, wherein the transmission point performing the rotating step is a serving transmission point or a non-serving transmission point.

4. A method for solving timing offset in arrival times of a signal transmitted from a plurality of transmission points in different geographic locations to a user equipment comprising:
receiving the signal from a transmission point, by the user equipment;
rotating a phase of the received signal by using a post-adjusting angle, by the user equipment; and
processing the phase-rotated signal, by the user equipment.

5. The method of claim 4, further comprising:
determining the post-adjusting angle corresponding to the transmission point according to a timing advance value of the transmission point, wherein the determining step is performed by the user equipment, by a serving transmission point synchronized with the user equipment, or by a non-serving transmission point;
when the determining step is performed by the serving transmission point, the method further comprises:
transmitting information regarding the post-adjusting angle from the serving transmission point to the user equipment; or
transmitting information regarding the post-adjusting angle from the serving transmission point to a non-serving transmission point corresponding to the post-adjusting angle, then to the user equipment; and
when the determining step is performed by the non-serving transmission point, the method further comprises:
transmitting information regarding the post-adjusting angle from the non-serving transmission point to the user equipment.

6. A method for solving timing offset in arrival times of a signal transmitted from a user equipment to a plurality of transmission points in different geographic locations comprising:
rotating a phase of the signal to be transmitted to a transmission point by using a pre-adjusting angle, by the user equipment; and
transmitting the phase-rotated signal to the transmission point, by the user equipment.

7. The method of claim 6, further comprising:
determining the pre-adjusting angle corresponding to the transmission point according to a timing advance value of the transmission point, wherein the determining step is performed by the user equipment, by a serving transmission point synchronized with the user equipment, or by a non-serving transmission point; and
when the determining step is performed by the serving transmission point or the non-serving transmission point, the method further comprises:
receiving information regarding the post-adjusting angle from the serving transmission point or from the non-serving transmission point, by the user equipment.

8. A method for solving timing offset in arrival times of a signal transmitted from a user equipment to a plurality of transmission points in different geographic locations comprising:
receiving the signal from the user equipment, by a transmission point;
rotating a phase of the received signal by using a post-adjusting angle; and
processing the phase-rotated signal.

9. The method of claim 8, further comprising:
determining the post-adjusting angle for the transmission point according to a timing advance value of the transmission point, wherein the determining step is performed by a serving transmission point synchronized with the user equipment, by a non-serving transmission point, or by the user equipment.

10. The method of claim 8, wherein the rotating step is performed by a serving transmission point or a non-serving transmission point.

11. A method for solving timing offset in arrival times of a signal transmitted from a user equipment to a plurality of transmission points in different geographic locations comprising:
determining different timing offsets for different transmission points based on timing advance values of the transmission points, by the user equipment; and
transmitting the signal to each transmission point with a corresponding timing offset, by the user equipment.

12. The method of claim 11, wherein the signal is transmitted to different transmission points via different antenna ports of the user equipment.

13. The method of any preceding claims, wherein the signal is a reference signal or a data signal.

14. A method for solving timing offset in arrival times of a signal comprising:
rotating a phase of the signal to be transmitted, by using a pre-adjusting angle, by a user equipment or a transmission point in a Coordinated Multi-point (CoMP) cooperating set, wherein the signal to be transmitted is a reference signal or a data signal; and
transmitting the phase-rotated signal.

15. A method for solving timing offset in arrival times of a signal comprising:
receiving the signal from a user equipment or a transmission point in a Coordinated Multi-point (CoMP) cooperating set, wherein the signal is a reference signal or a data signal;
rotating a phase of the signal by using a post-adjusting angle; and
processing the phase-rotated signal.

16. A computer program product, comprising computer program logic configured to put into effect the method of any of claims 1-15.

17. A communication apparatus, comprising
a storage unit configured to store the computer program product of claim 16; and
a controller module configured to control the computer program product for execution.
